# EUROPEAN PATENT APPLICATION

(11) **EP 2 328 019 A1**
(43) Date of publication of application: **01.06.2011**
(21) Application number: 08811030.9
(22) Date of filing: 19.09.2008
(51) Int. Cl.: G03B 21/14

(54) **IMAGE PROJECTOR**

(71) Applicant: Panasonic Electric Works Co., Ltd., Kadoma-shi Osaka 571-8686 (JP)
(72) Inventor: HASEGAWA, Junichi, Kadoma-shi Osaka 571-8686 (JP)
(74) Representative: Appelt, Christian W.
(86) International application number: PCT/JP2008/066999
(87) International publication number: WO 2010/032311

(57) **Abstract**

The image projector of the present invention includes a lighting device configured to light a high pressure discharge lamp, a rotary color filter, an image display device, and a synchronization device. The rotary color filter is configured to rotate about its axis and is divided into plural segments which are arranged around the axis and transmit lights of different colors. The synchronization device is configured to determine a rotation state of the rotary color filter, and output a synchronization signal to the lighting device on the basis of the determined rotation state. The synchronization signal is kept at ON-level over a time period in which predetermined one of the plural segments moves across the light path. The lighting device includes a time period calculation unit configured to calculate, for each of the plural segments, a time period in which the segment moves across the light path, on the basis of time in which the synchronization signal is kept at ON-level, of central angles of each segment, and of an order in which the plural segments come across the light path.

## Description

### Technical Field

The present invention is directed to image projectors, and particularly to an image projector employing a rotary color filter.

### Background Art

In the past, there have been proposed various image projectors. For example, Japanese patent laid-open publication No. 2007-79330 discloses an image projector employing a rotary color filter. In this image projector, the rotary color filter is used for dividing temporally a light emitted from a light source (in general, a high pressure discharge lamp) into lights of different colors (e.g., red, green, and blue as three primary colors of light). The image projector uses lights obtained by the rotary color filter to create monochromatic images (a red monochromatic image, a green monochromatic image, and a blue monochromatic image), respectively. The image projector successively projects these monochromatic images onto a screen to display a color image.

Improvement of image quality of the aforementioned image projector is expected. Improvement of color reproducibility is one method for improving image quality. For example, above Japanese patent laid-open publication No. 2007-79330 discloses a technique of improving color reproducibility by adjusting light output for each segment of the rotary color filter. However, according to the technique disclosed in above Japanese patent laid-open publication No. 2007-79330, a synchronization signal is generated for each segment of the rotary color filter. It is difficult to carry out generation of the synchronization signal for each segment and processing thereof.

### Disclosure of Invention

In view of the above insufficiency, the present invention has been aimed to propose an image projector having a simplified structure of controlling lamp current for each segment.

In order to solve the aforementioned problem, the image projector in accordance with the present invention includes a lighting device configured to light a high pressure discharge lamp, a rotary color filter, a rotary color filter driving device configured to rotate the rotary color filter about its axis, an image display device, a projection lens, and a synchronizing device. The rotary color filter is divided into plural segments arranged around the axis which transmit lights of different colors. The rotary color filter driving device is configured to rotate the rotary color filter such that the plural segments come across a light path of the light emitted from the high pressure discharge lamp in a predetermined order. The image display device is configured to modulate the light passing through one of the plural segments to generate a monochromatic image. The projection lens is adapted in use to project the monochromatic image generated by the image display device onto a screen. The synchronizing device is configured to determine a rotation state of the rotary color filter, and output a synchronization signal to the lighting device on a basis of the determined rotation state. The synchronizing device is configured to keep the synchronization signal at ON-level in synchronization with a time period in which predetermined one of the plural segments moves across the light path. The lighting device includes a lighting circuit configured to supply lamp current to the high pressure discharge lamp, and a control circuit configured to control the lighting circuit. The control circuit includes a time period calculation unit, and a current adjustment unit. The time period calculation unit is configured to calculate, for each of the plural segments, a time period in which the segment moves across the light path, on a basis of time in which the synchronization signal is kept at ON-level, of central angles of each segment, and of the predetermined order. The current adjustment unit is configured to control, over the time period in which the segment moves across the light path, the lighting circuit such that the lamp current has a predetermined value selected for the segment corresponding to the time period.

According to this invention, by use of the synchronization signal synchronized with the time period in which predetermined one of the plural segments moves across the light path, the time period in which the segment moves across the light path is calculated for each of the plural segments. Therefore, it is unnecessary to create the synchronization signals respectively corresponding to all the segments of the rotary color filter. Consequently, it is possible to provide a simplified structure of controlling lamp current of the high pressure discharge lamp for each segment.

In a preferred embodiment, the lighting circuit includes a polarity reversion circuit configured to reverse a polarity of the lamp current. The control circuit includes a polarity control unit configured to control the polarity reversion circuit. The polarity reversion unit is configured to control the polarity reversion circuit such that the polarity of the lamp current is reversed when the synchronization signal is switched to ON-level from OFF-level, or when the synchronization signal is switched to OFF-level from ON-level.

With this embodiment, irrespective of a change in a frequency of the synchronization signal, the lamp current can have its polarity reversed in synchronous with the switching of the segments of the rotary color filter. Therefore, it is possible to prevent instant extinction of the high pressure discharge lamp which would otherwise occur if the polarity of the lamp current is reversed while the segment is being selected, thereby improving image quality. Additionally, the high pressure discharge lamp can be free from uneven wearing of the electrodes, and therefore expected to have a long operation life.

### Brief Description of Drawings

FIG. 1 is a block diagram illustrating a system configuration of the image projector of the first embodiment,
FIG. 2 shows operation explanation charts of the above image projector, wherein (a) is a time chart indicating a selection condition of the segments of the rotary color filter, and (b) is a time chart of the synchronization signal Sync, and (c) is a time chart of the lamp current I_{L},
FIG. 3 is a block diagram illustrating the lighting device of the image projector of the second embodiment, and
FIG. 4 shows operation explanation charts of the above image projector, wherein (a) is a time chart indicating a selection condition of the segments of the rotary color filter, and (b) is a time chart of the synchronization signal Sync, and (c) is a time chart of the lamp current I_{L}.

### Best Mode for Carrying Out the Invention

### (FIRST EMBODIMENT)

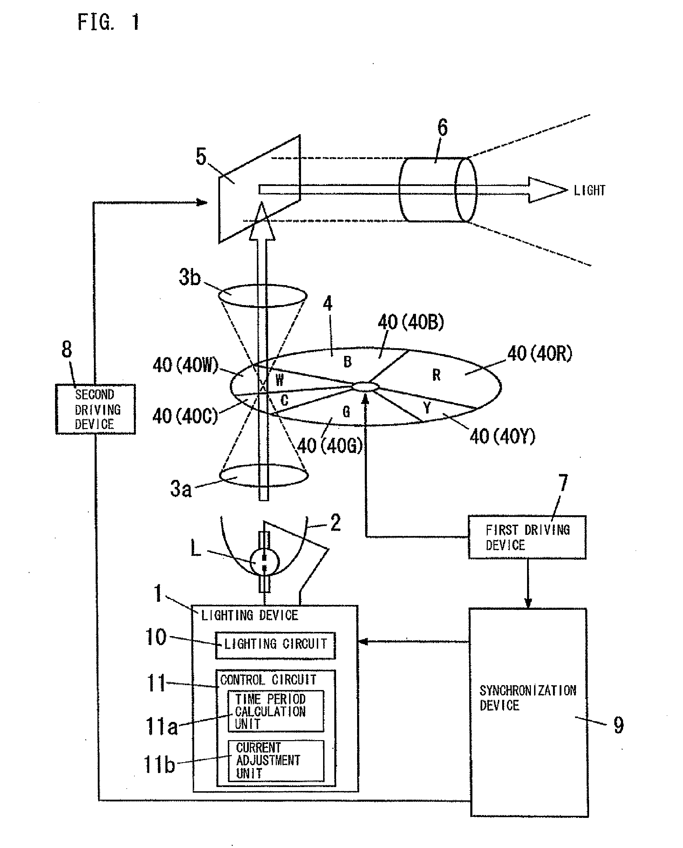

As shown in FIG. 1, the image projector of the present embodiment includes a lighting device (high pressure discharge lamp lighting device) **1** configured to light a high pressure discharge lamp **L**, a reflective plate **2**, two lenses **3a** and **3b**, a rotary color filter **4**, an image display device **5**, a projection lens **6**, a first driving device (rotary color filter driving device) **7**, a second driving device (optical element driving device) **8**, and a synchronization device (synchronization signal generation device) **9**.

The high pressure discharge lamp **L** is an HID lamp, for example. A lamp which emits white light is adopted as the high pressure discharge lamp **L** for preparing a color image.

The lens **3a**, the rotary color filter **4**, the lens **3b**, and the image display device **5** are arranged in a light path of the high pressure discharge lamp **L**. Therefore, as shown in FIG. 1, light emitted from the high pressure discharge lamp **L** comes into the image display device **5** by passing through the lens **3a**, the rotary color filter **4**, and the lens **3b**. The reflective plate **2** is configured to give directional characteristics to the light emitted from the high pressure discharge lamp **L** such that the large amount of the light emitted from the high pressure discharge lamp **L** comes into the image display device **5**. The reflective plate **2** can be selected from one of conventional reflective plates, and no detailed explanation thereof is deemed necessary.

The image display device **5** is a reflective type image display device such as a DMD (Digital Micromirror Device). The DMD is made by arranging, in a matrix manner, a plurality (e.g., several hundred thousand to several million) of micro mirrors on an integrated circuit which is prepared by a CMOS process, by use of a MEMS technique. The micro mirror is configured to rotate between a first position and a second position. The first position is defined as a position in which the micro mirror reflects the light coming into the image display device **5** to the projection lens **6**. The second position is defined as a position in which the micro mirror does not reflect the light coming into the image display device **5** to the projection lens **6**. The micro mirror has about 10µm in size, and is corresponding to one pixel of the displayed image. Therefore, while the micro mirror is in the first position, the corresponding pixel has relatively high brightness. While the micro mirror is in the second position, the corresponding pixel has relatively low brightness. In other words, the image display device 5 is configured to modulate the received light to prepare a gray scale image (binary image). The aforementioned DMD is well known, and no detailed explanation is deemed necessary.

The rotary color filter **4** is an optical filter which exclusively transmits a light having a predetermined color (light having a predetermined wavelength), and is shaped into a circular disk shape. The rotary color filter **4** is divided into plural (six, in the illustrated instance) fan-shaped segments (color segments) **40** along its circumferential direction. Each segment is configured to transmit a light different in color from those of the other segments. In the present embodiment, colors of lights transmitted by the segments are six colors of red (R), yellow (Y), green (G), cyan (C), white (W) and blue (B). In the following explanation, in order to distinguish the plural segments **40**, the segment **40** corresponding to the red is represented by the reference numeral of **40R**, and the segment **40** corresponding to the yellow is represented by the reference numeral of **40Y**, and the segment **40** corresponding to the green is represented by the reference numeral of **40G**, and the segment **40** corresponding to the cyan is represented by the reference numeral of **40C**, and the segment **40** corresponding to the white is represented by the reference numeral of **40W**, and the segment **40** corresponding to the blue is represented by the reference numeral of **40B**.

The rotary color filter **4** is configured to rotate about its axis as a rotation axis. Additionally, the rotary color filter **4** is rotated at a predetermined speed such that the plural segments **40** move across the light path of the high pressure discharge lamp **L** in a predetermined order. Consequently, during a time period in which the segment **40R** moves across the light path, that is, a time period (selection period) in which the segment **40R** is selected, the red light comes into the image display device **5**. The yellow light comes into the image display device **5** during the selection period of the segment **40Y**. Accordingly, the six lights, that is, the red light, yellow light, green light, cyan light, white light, and blue light sequentially come into the image display device **5**. In brief, the rotary color filter **4** divides the light emitted from the high pressure discharge lamp **L** into the six lights of the red light, yellow right, green light, cyan light, white light, and blue light temporally. Notably, a time period in which any one of the six light comes into the image display device **5** is equal to a time period in which corresponding one of the segments **40** comes across the light path of the high pressure discharge lamp **L**, and is determined mainly by a rotation speed of the rotary color filter **4,** and an angle (central angle) of the segment **40**. Besides, the rotary color filter **4** has spokes (not shown) each interposed between the neighboring segments **40**. The spoke serves to prevent an undesired interference (i.e., color mixture) which would otherwise occur between the neighboring segments **40**.

The lens **3a** is adapted in use to condense the light emitted from the high pressure discharge lamp **L** to the rotary color filter **4**. The lens **3b** is adapted in use to direct the light passing through the rotary color filter **4** into all the plural micro mirrors of the image display device **5**. Further, the projection lens **6** is adapted in use to project an image created by the image display unit **5** onto a screen (not shown).

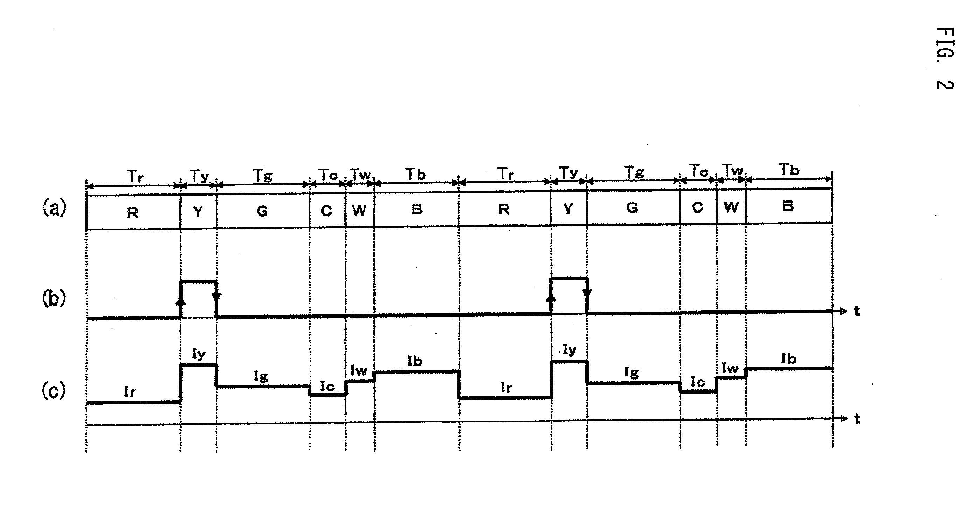

The first driving device **7** is configured to rotate the rotary color filter **4** about its axis. Besides, a speed (rotation speed of the rotary color filter **4**) at which the first driving device **7** rotates the rotary color filter **4** is determined on the basis of a period of a synchronizing signal (vertical synchronizing signal) included in a video signal, for example. In the present embodiment, as shown in (a) of FIG. 2, the rotary color filer **4** is caused to rotate in a direction (i.e. in a counter-clockwise direction in FIG. 1) such that the light from the high pressure discharge lamp **L** is converted into the red light (R), the yellow light (Y), the green light (G), the cyan light (C), the white light (W), and the blue light (B) successively in this order.

The synchronizing device **9** includes a detector (not shown) configured to determine a rotation state of the rotary color filter **4**. For example, the detector is a color sensor configured to detect a light passing through predetermined one of the plural segments **40**. The detector is arranged to receive the light passing through predetermined one of the plural segments **40**. Upon receiving the light passing through predetermined one of the plural segments **40**, the detector outputs a detection signal. The synchronizing device **9** outputs a synchronization signal **Sync** to both the lighting device **1** and the second driving device **8** on the basis of a detection result of the detector. Particularly, the synchronizing device **9** keeps the synchronization signal **Sync** at ON-level while receiving the detection signal from the detector, and keeps the synchronization signal **Sync** at OFF-level while receiving no detection signal from the detector. In other words, the synchronization signal **Sync** is defined as a signal which goes ON-level over a period in which the predetermined one of the plural segments **40** comes across the light path of the high pressure discharge lamp **L**, and goes OFF-level over the remaining period. Besides, a positive logic (high active) is used in the present embodiment, and ON-level denotes a high level of the synchronization-signal **Sync**, and OFF-level denotes a low level of the synchronization signal **Sync**. Alternatively, a negative logic (low active) may be used in the present embodiment. With this instance, ON-level may denote the low level of the synchronization-signal **Sync**, and OFF-level may denote the high level of the synchronization signal **Sync**.

As described in the above, the synchronizing device **9** is configured to determine the rotation state of the rotary color filter **4**, and output the synchronization signal **Sync** on the basis of the determined rotation state. The synchronizing device **9** keeps the synchronization signal **Sync** at ON-level in synchronization with a time period in which predetermined one of the plural segments **40** moves across the light path. In the present embodiment, the segment **40Y** passing the yellow light is selected as predetermined one of the plural segments **40**. Accordingly, as shown in (b) of FIG. 2, the synchronization signal **Sync** is kept at ON-level while the segment **40Y** is selected.

The lighting device **1** is a ballast designed for the high pressure discharge lamp **L**, and includes a lighting circuit **10** configured to light the high pressure discharge lamp **L** and a control circuit **11** configured to control the lighting circuit.

The lighting circuit **10** includes a rectifier, a step-up chopper, a step-down chopper, and an igniter, for example. The rectifier is configured to rectify an AC voltage which is received from an AC voltage source (commercial AC voltage source), for example. The step-up chopper is configured to increase an output voltage of the rectifier up to a predetermined DC voltage. The step-down chopper is configured to decrease an output voltage of the step-up chopper to apply the same between electrodes of the high pressure discharge lamp **L**. According to the present embodiment, a lamp current **I_{L}** which the lighting circuit **10** supplies to the high pressure discharge lamp **L** is determined depending on an output voltage of the step-down chopper. The igniter is configured to provide an initiating voltage higher than the output voltage of the step-down chopper to the high pressure discharge lamp **L** in order to initiate the same (to cause insulation breakdown thereof). Besides, the aforementioned rectifier, step-up chopper, step-down chopper, and igniter are well known, and no detailed explanations and drawings thereof are deemed necessary.

The control circuit **11** includes a time period calculation unit **11a** and a current adjustment unit **11b**. The control circuit **11** may be a micro computer (micro controller, and referred to as a CPU in a broad sense). The CPU executes programs stored in its memory to realize the time period calculation unit **11a** and the current adjustment unit **11b**. The memory of the microcomputer constructing the control circuit **11** stores central angles of each segment **40**, an order in which the segments **40** are selected, and predetermined values of the lamp current I_{L} respectively corresponding to the plural segments **40**. Besides, the predetermined value is selected to provide the color reproducibility corresponding to a user's request. In the following explanation, the central angles of the segments **40R**, **40Y**, **40G**, **40C**, **40W**, and **40B** are represented by **θr**, **θy**, **θg**, **θc**, **θw**, and **θb**, respectively. The segments **40** are obtained by dividing the rotary color filter **4** having a disk shape in a circumferential direction thereof. Therefore, a relation of **θr+θy+θg+θc+θw+θb=360** degree is fulfilled. Further, the selection periods of the segments **40R**, **40Y**, **40G**, **40C**, **40W**, and **40B** are represented by **Tr**, **Ty**, **Tg**, **Tc**, **Tw**, and **Tb**, respectively. A total of the selection periods of the segments **40** is equal to a rotation period of the rotary color filter **4**. Besides, the predetermined values of the lamp current **I_{L}** corresponding to the segments **40R**, **40Y**, **40G**, **40C**, **40W**, and **40B** are represented by **Ir**, **Iy**, **Ig**, **Ic**, **Iw**, and **Ib**, respectively.

The time period calculation unit **11a** is configured to calculate, for each of the plural segments **40**, a time period in which the segment **40** moves across the light path, on the basis of the time in which the synchronization signal **Sync** is kept at ON-level, of the central angles of each segment **40**, and of the predetermined order.

The selection periods of each segment **40** is determined by the rotation speed of the rotary color filter **4**, and the angle (central angle) of the segment **40**. The rotation speed of the rotary color filter **4** is kept constant. Therefore, if the central angles of the segments **40** and one of the selection periods of the segment **40** are obtained, the other selection periods of the segment **40** can be calculated.

The synchronization signal **Sync** in accordance with the present embodiment is kept at ON-level over the selection period **Ty** of the segment **40Y**. Therefore, the selection period **Ty** of the segment **40Y** can be determined by measuring a time period in which the synchronization signal **Sync** is kept at ON-level. In this situation, the rotation speed of the rotary color filter **4** is given by **θy/Ty**. Therefore, **Tr** equals to **θr*Ty/θy**, and **Tg** equals to **θg*Ty/θy**, and **Tc** equals to **θc*Ty/θy**, and **Tw** equals to **θw*Ty/θy**, and **Tb** equals to **θb*Ty/θy**. Consequently, the selection periods **Tr**, **Ty**, **Tg**, **Tc**, **Tw**, and **Tb** of the segments **40R**, **40Y**, **40G**, **40C**, **40W**, and **40B** can be calculated on the basis of the synchronization signal **Sync**.

The current adjustment unit **11b** is configured to control, over the time period in which the segment **40** moves across the light path, the lighting circuit **10** such that the lamp current I_{L} has the predetermined value selected for the segment **40** corresponding to the time period. Besides, the lamp current **I_{L}** can be adjusted by changing a switching frequency and/or a duty ratio of a switch of the step-down chopper of the lighting circuit **11a**.

In other words, the control circuit **11** controls, on the basis of the synchronization signal **Sync**, the lighting circuit **10** such that the lamp current **I_{L}** flowing through the high pressure discharge lamp **L** has the predetermined value corresponding to the selected segment **40**.

Next, an explanation is made to operation of the time period calculation unit **11** a and the current adjustment unit **11b**. For example, the time period calculation unit **11a** makes, every a minute time, an interrupt action by use of a timer interruption function of the microcomputer to monitor the synchronization signal **Sync**. Besides, the synchronization signal **Sync** is input into a binary input port of the micro computer constructing the control circuit **11**, for example.

The time period calculation unit **11a** starts to count time by use of a timer when the synchronization signal **Sync** is switched to ON-level from OFF-level (the synchronization signal **Sync** is switched to the high level from the low level). The timer counts time until the synchronization signal **Sync** is switched to OFF-level from ON-level (the synchronization signal **Sync** is switched to the low level from the high level). The time counted by the timer indicates a time length of the synchronization signal **Sync**, that is, the selection period **Ty** of the segment **40Y**. While the synchronization signal **Sync** is ON-level, the current adjustment unit **11b** controls the step-down chopper of the lighting circuit **10** such that the lamp current **I_{L}** is equal to the predetermined value **Iy** corresponding to the segment **40Y**.

Upon determining the selection period **Ty**, the time period calculation unit **11a** calculates, by using the above relation **(Tg=θg*Ty/θy)**, the selection period **Tg** of the segment **40G** which is next to the segment **40Y**. Subsequently, the time period calculation unit **11a** controls the timer to count to the selection period **Tg** as a target value. Over the selection period **Tg**, the current adjustment unit **11b** controls the step-down chopper such that the lamp current **I_{L}** is equal to the predetermined value **Ig** corresponding to the segment **40G**.

When a count of the selection period **Tg** by the timer is finished, the time period calculation unit **11a** resets the timer, and calculates the selection period **Tc** of the next segment **40C**. Upon determining the selection period **Tc**, the time period calculation unit **11a** controls the timer to count to the selection period **Tc** as a target value. Over the selection period **Tc**, the current adjustment unit **11b** controls the step-down chopper of the lighting circuit **10** such that the lamp current **I_{L}** is equal to the predetermined value **Ic** corresponding to the segment **40C**.

After that, the time period calculation unit **11a** calculates the selection periods **Tw**, **Tb**, and **Tr** in sequence. The current adjustment unit **11b** controls the step-down chopper of the lighting circuit **10** such that the lamp current **I_{L}** is equal to the predetermined values **Iw**, **Ib**, and **Ir** corresponding to the segments **40W**, **40B**, and **40R** over the selection periods **Tw**, **Tb**, and **Tr**, respectively. With respect to the last selection period **Tr**, the selection period Tr need not be calculated. The lamp current **I_{L}** may be adjusted to be equal to the predetermined value lr until the synchronization signal **Sync** is switched to ON-level from OFF-level.

Thereafter, with repeating the aforementioned process, the time period calculation unit **11a** calculates the selection periods of all the plural segments **40**. The current adjustment unit **11b** adjusts the lamp current **I_{L}** on the basis of calculation results of the time period calculation unit **11a**. Therefore, as shown in (c) of FIG. 2, the lamp current **I_{L}** is adjusted to be identical to one selected from the predetermined values **Ir**, **Iy**, **Ig**, **Ic**, **Iw**, and **Ib** in accordance with the selected segment **40**.

The second driving device **8** is configured to control the image display device **5**. The second driving device **8** controls the image display device **5** depending on an image signal included in the video signal. With this situation, the second driving device **8** calculates the selection periods **Tr**, **Ty**, **Tg**, **Tc**, **Tw**, and **Tb** of the segments **40** by use of the synchronization signal **Sync** in a similar manner as the lighting device **1**. The second driving device **8** controls, in each of the selection periods of the segments **40**, the image display device **5** with reference to the image signal, so as to successively project the images of colors respectively corresponding to the segments **40**, that is, the red, yellow, green, cyan, white, and blue monochromatic images onto the screen. Thus, a color image is displayed on the screen.

As described in the above, according to the image projector of the present embodiment, the time period calculation unit **11a** is configured to calculate, for each of the plural segments **40**, the selection period, on the basis of the synchronization signal which is kept at ON-level over the selection period of predetermined one of the plural segments **40** of the rotary color filter **4**, of the central angles of each of the plural segments **40**, and of the order of the plural segments **40**.

According to the image projector of the present embodiment, a time period (selection period) in which each segment comes across the light path is calculated by use of the synchronization signal **Sync** synchronized with a time period (selection period **Ty**) in which predetermined one of the plural segments **40** (the segment **40Y**, in the present embodiment) comes across the light path. Consequently, it is unnecessary to generate the synchronization signal for each of all the segments **40** of the rotary color filter **4**. Thus, it is possible to provide a simplified structure of controlling lamp current **I_{L}** of the high pressure discharge lamp **L** for each segment **40**.

In addition, even if a frequency of the synchronization signal **Sync** (the rotation period of the rotary color filter **4**) is changed, the central angles of the segments **40** are not changed. Therefore, proportions of the selection periods **Tr**, **Ty**, **Tg**, **Tc**, **Tw**, and **Tb** to an entire period (rotation period of the rotary color filter **4**) are not changed. Accordingly, the brightness and the color reproducibility of the color image output from the image projector see little change. Thus, it is possible to provide the color reproducibility that satisfies the user's demand irrespective of the rotation cycle of the rotary color filter **4** (it is possible to adjust a hue of the image in conformity with the user's request).

### (SECOND EMBODIMENT)

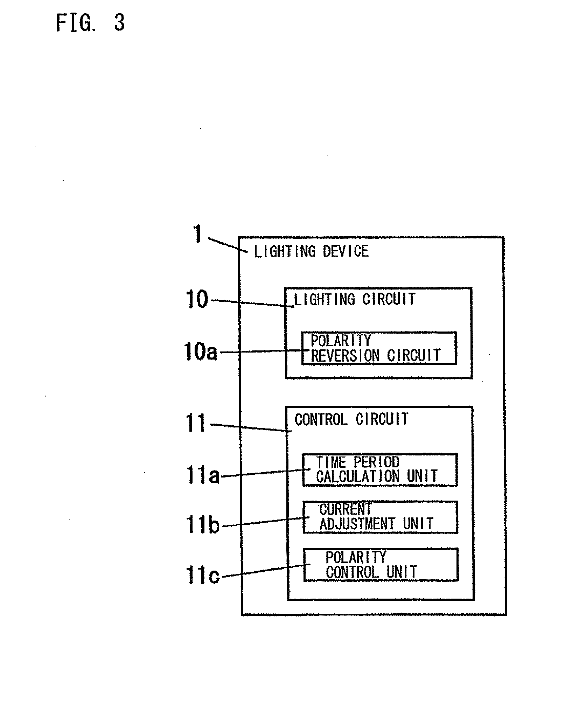

As shown in FIG. 3, the image projector of the present embodiment is characterized in the configuration of the lighting device **1**. The other configurations of the image projector are the same as those of the first embodiment, and no explanations and drawings thereof are deemed necessary.

The lighting device **1** in the present embodiment is different form that of the first embodiment in the lighting circuit **10** and the control circuit **11**. The lighting circuit **10** in the present embodiment includes a polarity reversion circuit **10a** in addition to the rectifier, the step-up chopper, the step-down chopper, and the igniter. Besides, the rectifier, the step-up chopper, the step-down chopper, and the igniter are the same as those of the first embodiment, and no explanations and drawings are deemed necessary.

The polarity reversion circuit **10a** is a full bridge type inverter circuit configured to reverse a polarity of the output voltage of the step-down chopper at a predetermined period, and apply the resultant output voltage between the electrodes of the high pressure discharge lamp **L**. Besides, the polarity reversion circuit **10a** may be a half bridge type inverter circuit.

The control circuit **11** in the present embodiment includes a polarity control unit **11c** configured to control the polarity reversion circuit **10a**, in addition to the time period calculation unit **11a** and the current adjustment unit **11b**. The time period calculation unit **11a** and the current adjustment unit **11b** are the same as those of the first embodiment, and no explanations thereof are deemed necessary.

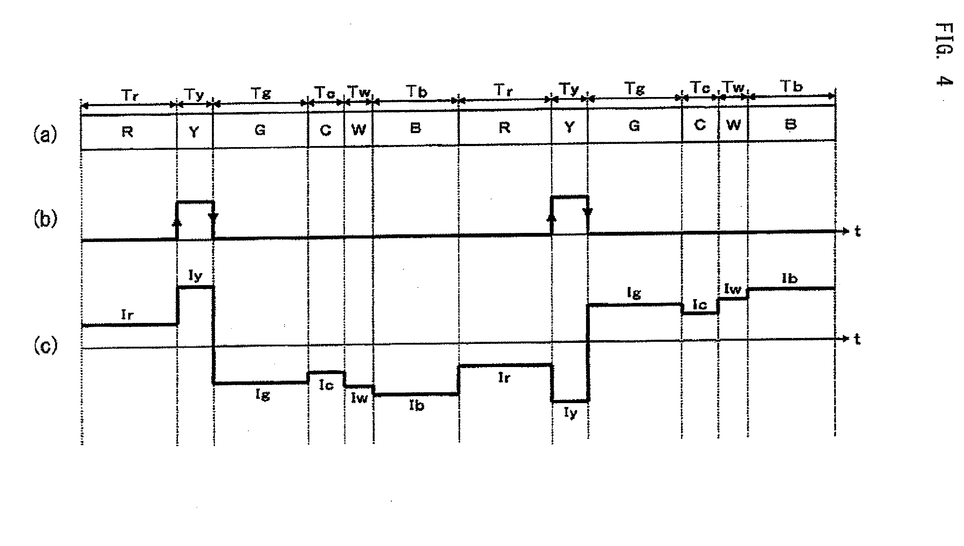

The polarity control unit **11c** is configured to control the polarity reversion circuit **10a** to reverse the polarity of the lamp current **I_{L}** at a predetermined point of time. As shown in (a) to (c) of FIG. 4, the predetermined point of time is defined as a point of time at which the synchronization signal **Sync** is switched to OFF-level to ON-level. In the present embodiment, the polarity of the lamp current **I_{L}** is reversed when the synchronization signal **Sync** is switched to OFF-level to ON-level.

According to the image projector of the present embodiment, irrespective of a change in a frequency of the synchronization signal **Sync**, the lamp current **I_{L}** can have its polarity reversed in synchronous with the switching of the segments **40** of the rotary color filter **4**. Therefore, it is possible to prevent instant extinction of the high pressure discharge lamp **L** which would otherwise occur if the polarity of the lamp current **I_{L}** is reversed while the segment is being selected, thereby improving image quality. Additionally, the high pressure discharge lamp **L** can be free from uneven wearing of the electrodes, and therefore expected to have a long operation life.

Besides, in the first and second embodiments, the selection period **Ty** of the segment **40Y** corresponding to yellow is adopted as the time period in which the synchronization signal **Sync** is kept at ON-level. The selection period of the other segment **40** may be adopted as the time period in which the synchronization signal **Sync** is kept at ON-level. In brief, the time period in which the synchronization signal **Sync** is kept at ON-level may be the selection period corresponding to one selected from the plural segments **40**.

Although all of the plural segments **40** are different in color from each other in the first and second embodiments, they may not be necessarily different from each other. For example, the rotary color filter **4** may include the two segments **40R** configured to transmit the red light, the two segments **40G** configured to transmit the green light, and the two segments **40B** configured to transmit the blue light. In brief, it is sufficient that the plural segments **40** may include segments which transmit lights of different colors (the plural segments **40** may include segments which transmit lights of the same color).

In the first and second embodiments, the color sensor is adopted as the detector of the synchronizing device **9**. The detector is not limited to the above instance, but may be selected from one of a photo interrupter and a photo reflector (reflection type photo interrupter). In a situation where the photo interrupter is adopted as the detector, the rotary color filter **4** may be provided in its particular portion with a transmission window, and the detector may be configured to detect the light which passes through the transmission window. In a situation where the photo reflector is adopted as the detector, the rotary color filter **4** may be provided in its particular portion with a reflective board, and the detector may be configured to detect the light which is reflected by the reflective board. Besides, the time period in which the synchronization signal **Sync** is kept at ON-level may be determined by use of any other means.

In the first and second embodiments, the image display device **5** is a reflection type image display device (e.g., a DMD). The image display device **5** is not limited to the aforementioned instance, but may be a transmission type image display device. A liquid crystal panel may be adopted as the transmission type image display device.

A person skilled in the art will recognize that the aforementioned embodiments are preferred embodiments of the image projector of the present invention, and that changes and modifications may be made without departing from the spirit and scope of the present invention.

## Claims

1. An image projector comprising:
a lighting device configured to light a high pressure discharge lamp;
a rotary color filter,
a rotary color filter driving device configured to rotate said rotary color filter about its axis;
an image display device;
a projection lens; and
a synchronizing device,
wherein said rotary color filter is divided into plural segments arranged around the axis which transmit lights of different colors,
said rotary color filter driving device being configured to rotate said rotary color filter such that said plural segments come across a light path of the light emitted from said high pressure discharge lamp in a predetermined order,
said image display device being configured to modulate the light passing through one of said plural segments to generate a monochromatic image,
said projection lens being adapted in use to project the monochromatic image generated by said image display device onto a screen,
said synchronizing device being configured to determine a rotation state of said rotary color filter, and output a synchronization signal to said lighting device on a basis of the determined rotation state, said synchronizing device keeping said synchronization signal at ON-level in synchronization with a time period in which predetermined one of said plural segments moves across the light path,
said lighting device including a lighting circuit configured to supply lamp current to said high pressure discharge lamp, and a control circuit configured to control said lighting circuit,
said control circuit including a time period calculation unit, and a current adjustment unit,
said time period calculation unit being configured to calculate, for each of said plural segments, a time period in which said segment moves across the light path, on a basis of time in which the synchronization signal is kept at ON-level, of central angles of each segment, and of said predetermined order, and
said current adjustment unit being configured to control, over the time period in which said segment moves across the light path, said lighting circuit such that said lamp current has a predetermined value selected for said segment corresponding to the time period.

2. The image projector as set forth in claim 1, wherein
said lighting circuit includes a polarity reversion circuit configured to reverse a polarity of the lamp current,
said control circuit including a polarity control unit configured to control said polarity reversion circuit, and
said polarity reversion unit being configured to control said polarity reversion circuit such that the polarity of the lamp current is reversed when said synchronization signal is switched to ON-level from OFF-level, or when said synchronization signal is switched to OFF-level from ON-level.
